# EUROPEAN PATENT APPLICATION

(11) **EP 1 744 242 A2**
(43) Date of publication of application: **17.01.2007**
(21) Application number: 06116571.8
(22) Date of filing: 04.07.2006
(51) Int. Cl.: G06F 3/048

(54) **Apparatus and method for displaying icon**

(30) Priority: 11.07.2005 KR 2005062314
(71) Applicant: SAMSUNG ELECTRONICS CO., LTD., Suwon-si Gyeonggi-do 442-742 (KR)
(72) Inventor: Chae, Yeong-sook, Jung-gu Seoul (KR); Kim, Moon-gyu, Seoul (KR)
(74) Representative: Robinson, Ian Michael

(57) **Abstract**

An apparatus and method of displaying an icon displayed on a desktop or a file explorer by assigning a transparency to the icon and changing the transparency of the icon according to a date when a program linked to the icon was last accessed. The apparatus includes a scanning unit (320) to scan an icon, a detection unit (330) to detect predetermined date information given to the scanned icon, an icon conversion unit (340) to convert the scanned icon into an icon corresponding to the difference between the detected date information and a current date, and a display unit (350) to display the converted icon thereon.

## Description

An aspect of the present invention relates to an apparatus and method to display an icon, and, more particularly, to an apparatus and method to display an icon displayed on a desktop or a file explorer by assigning transparency to the icon and changing the transparency of the icon according to a date when the icon was last accessed.

The development of the mouse as an input device for a computer system, such as a personal computer (PC), a notebook computer, or a workstation, has eventually led to the development of graphical user interface (GUI). Graphical user interfaces (GUIs) are program interfaces that allow a user to take advantage of a computer system's graphic capabilities to make a program easier to use. GUIs are developed to reduce the inconvenience of typical user interfaces which require a use to input data using a keyboard and to memorize a considerable number of complex commands. As the first to be implemented with the GUI function, "Alto" computers, developed by the Xerox Corporation, included a mouse, a graphics window, a networking function, and an operating system (OS) capable of supporting GUIs including the mouse, the graphics window, and the networking function. Later, a double clicking function and a multi-window were provided to "Star" computers that were the first commercially developed personal computers (PCs).

Soon after, the Apple Corporation developed "Lisa" computers which were the first PCs to be provided with functions such as a menu bar and a drop-down menu. Lisa gained commercial success and was, thus, well known to the public. The introduction of Lisa substantially resulted in completion of most of the existing GUIs, and, thereafter, Apple developed the "Macintosh" computer that gained wide popularity.

The Microsoft Corporation participated in a joint-development of application programs for "Macintosh" computers, and later developed an operating system (OS), "Windows 1.0" based on the technology obtained during the participation. At first, Windows 1.0 was merely a software tool kit but has gradually advanced into an operating system (OS) that secured the largest number of users worldwide.

In particular, the widespread use of Windows operating system (OS) and the Internet accelerated the further development of GUI functions. As a result, user-friendly GUIs that can provide users with relatively easily recognizable information under various environments have been developed.

Generally, the GUI function is convenient in that it provides a user-friendly way of using a computer system in addition to quickly providing readily noticeable information on the desktop of a personal computer (PC). Users can relatively easily control or command a computer system by simply moving a mouse pointer via a mouse, and clicking or double-clicking an icon pointed to by the mouse pointer. Further, the GUI function may be used to represent information regarding a file or other types of data. In this case, information may be marked by separate dialogue windows, tool tips, etc.

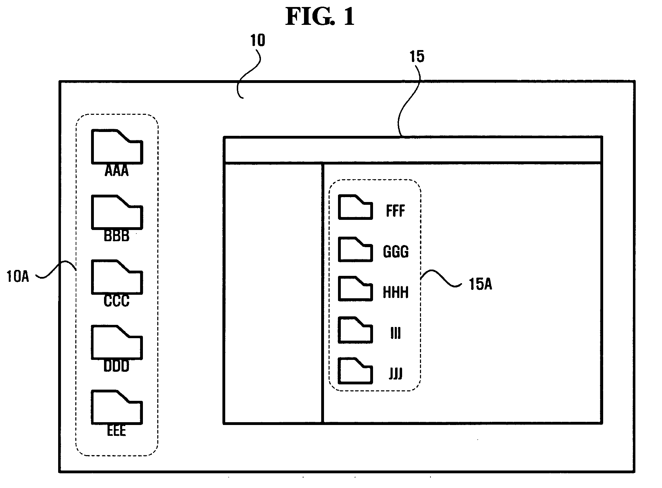

Figure 1 illustrates an example of a graphical user interface (GUI) provided by Windows Explorer installed on a desktop. As shown in Figure 1, the desktop 10 and Windows Explorer 15, each having icons displayed thereon. The desktop 10 and Windows Explorer 15 are supported by an operating system such as "Windows 2000". On the desktop 10, file and folder icons 10A that are provided from the operating system (OS) are displayed. Alternatively, a user may arrange icons or folder icons to allow for an execution of regularly used programs according to his/her preference.

The icons 10A displayed on the desktop 10 are classified as icons indicating the path of an actual program or a folder and icons created by the copying of an actual program or a folder. A user using a mouse pointer may point to a certain icon and click or double-click the icon in order to execute a program linked to the icon, to check the contents of a folder, or to perform an operation on a copy of the program or the folder. Similarly, file and folder icons 15A are displayed on the appropriate field in Windows Explorer 15, in which the user can create a folder, and display icons for the folder on the Windows Explorer 15 or in the created folder. When the user installs a program, a copy of a folder or a file for the program may be stored in a storage medium such as a hard disc, and the stored folder or file may be displayed in the form of an icon.

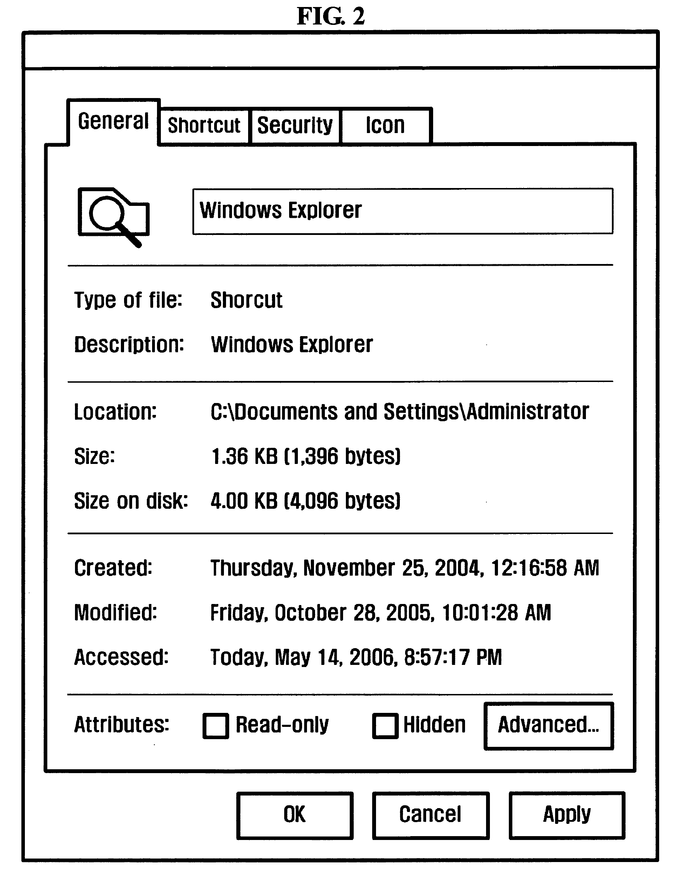

Figure 2 illustrates example properties of a conventional file or folder provided by Windows Explorer 15. When a user installs a program to create a file or a folder, unique properties are assigned to the created file or folder. The properties of the file (or the folder) include a file format, a linked program, a file location, a file size, a creation date, a modified date, and a last access date, etc. Here, it is noted that the creation date indicates a date when the file icon or the folder icon was created. If a file icon linked to a certain program is copied in a separate location, the copy of the file icon is regarded as being newly created. For instance, when a copy of a file icon created by the installation of a program is stored on a desktop or in a separate folder, the creation date of the file icon stored on the desktop or in the separate folder is different from that of the file icon created during the installation. Similarly, the access dates of a plurality of icons linked to a certain program are updated each time the icons are accessed.

As is described above, a user may arrange file icons or folder icons on a desktop according to his/her preference to increase the efficiency of his/her work and for the purposes of convenience. Accordingly, the user can execute a file or check a folder without moving to the logical location in which the file or the folder is actually stored.

However, since the size of a desktop is limited, the number of icons that can be readily displayed for viewing is also limited. Further, work efficiency may be lowered when a large number of icons are simultaneously displayed on the desktop. Accordingly, there is a growing need to develop a method of informing a user of icons that are regularly used and of informing the user of the duration of the presence of the icons that are not regularly used.

Korean Patent Unexamined Publication No. 2005-0004703 discloses a method of improving the working environment of a desktop by abstracting, hiding, and/or sequencing information by the priority of the information (tokens, clusters, files, folders, icons, a menu, tools, texts, data, etc.) on the desktop. However, since whether and how to display an information item are determined according to the priority, users must assign priorities to the information items and must also frequently adjust the assigned priorities since they are not updated automatically, thereby causing inconveniences to the users.

According to the present invention there is provided an apparatus and method as set forth in the appended claims. Preferred features of the invention will be apparent from the dependent claims, and the description which follows.

An aspect of the present invention solves the above-mentioned and/or other problems occurring in the related art. Additionally, according to an aspect of the present invention icons are displayed on a desktop or Windows Explorer such that transparency is assigned to each icon and the transparency is changed according to an access date when a program linked to the icon was last accessed.

According to another aspect of the present invention, an icon is displayed such that the icon is replaced with a previously created icon corresponding to an access date when the icon was last accessed.

According to another aspect of the present invention, an icon is displayed such that the size of the icon is changed according to an access date when the icon was last accessed.

According to another aspect of the present invention, an icon is displayed such that the color of the icon is changed to a color corresponding to a work priority given to the icon.

In order to accomplish these and/or other aspects, there is provided an apparatus to display an icon. The apparatus includes a scanning unit to scan the icon, a detection unit to detect predetermined date information assigned to the scanned icon, an icon conversion unit to convert the scanned icon into an icon corresponding to a difference between the detected predetermined date information and a current date, and a display unit to display the converted icon.

According to another aspect of the present invention, there is provided a method of displaying an icon. The method includes scanning the icon, detecting predetermined date information assigned to the scanned icon, converting the scanned icon into an icon corresponding to a difference between the detected predetermined date information and a current date, and displaying the converted icon.

Additional aspects and/or advantages of the invention will be set forth in part in the description which follows and, in part, will be obvious from the description, or may be learned by practice of the invention.

These and/or other aspects and advantages of the invention will become apparent and more readily appreciated from the following description of the embodiments, taken in conjunction with the accompanying drawings of which:
Figure 1 is a view illustrating a conventional desktop and Windows Explorer, in which icons are displayed;
Figure 2 is a view illustrating the properties of a conventional file or folder;
Figure 3 is a block diagram of an apparatus to display an icon according to an embodiment of the present invention;
Figure 4 is a view illustrating icons to which different transparencies are assigned according to access dates when the respective icons were last accessed, according to an embodiment of the present invention;
Figure 5 is a view illustrating previously created icons that are categorized according to access dates when the respective icons were last accessed, according to an embodiment of the present invention;
Figure 6 is a view illustrating displayed icons in which the size of the icons is changed according to access dates when the respective icons were last accessed, according to an embodiment of the present invention;
Figure 7 is a view illustrating a window in which previously created icons respectively correspond to access date levels, according to an embodiment of the present invention;
Figure 8 is a view illustrating a method of assigning work priority to an icon according to an embodiment of the present invention;
Figure 9 is a flowchart illustrating a method of displaying an icon according to an access date when the icon was last accessed, according to an embodiment of the present invention; and
Figure 10 is a flowchart illustrating a method of displaying an icon, in which the transparency thereof is changed according to an access date when the icon was last accessed, according to an embodiment of the present invention.

Reference will now be made in detail to the present embodiments of the present invention, examples of which are illustrated in the accompanying drawings, wherein like reference numerals refer to the like elements throughout. The embodiments are described below in order to explain the present invention by referring to the figures.

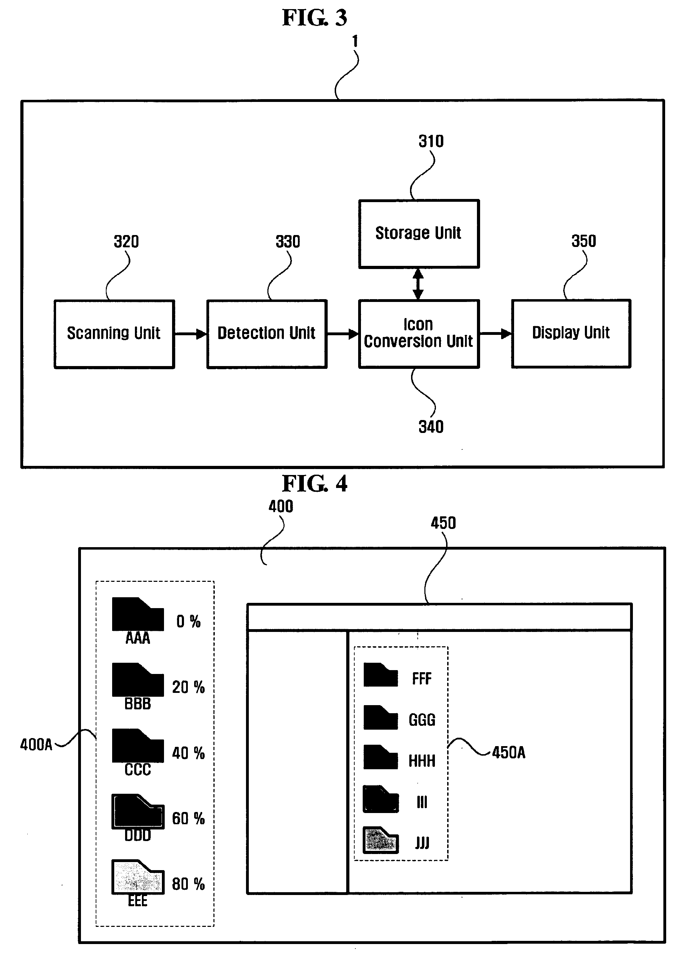

Figure 3 is a block diagram of an apparatus 1 to display icons according to an embodiment of the present invention. The apparatus 1 includes a storage unit 310, a scanning unit 320, a detection unit 330, an icon conversion unit 340, and a display unit 350.

The apparatus 1 is understood as having a predetermined operating system (OS) that is installed in a storage unit and operates by a central processing unit (CPU), and a built-in or separate display unit. For instance, the apparatus 1 may be a desktop, a laptop, or a personal digital assistant (PDA) that a user accesses via a GUI. In detail, the apparatus 1 allows a user to create or arrange file or folder icons in various ways, and allows the user to execute certain programs or to check the contents of a folder saved in the apparatus 1 using icons displayed on the apparatus 1.

A difference between an access date that an icon was last accessed and a current date is categorized into a plurality of levels (hereinafter, referred to as "access date levels"). The storage unit 310 stores the value of each access date level and predetermined icons that correspond to the access date levels. The storage unit 310 also stores information regarding the size of icons such that the shape of the icons can be changed according to the access date level. The user may set the access date levels in units of days, weeks, months, or years. For instance, the user may set a first access date level to less than six months, a second access date level to between six to twelve months, a third access date level to between one to two years, and a fourth date access level to two years or more. In addition, the storage unit 310 may store transparencies corresponding to the respective access date level. This allows the user to assign relative transparencies (e.g., 20%, 40%, 60%, and 80%) to the respective access date levels.

As noted above, predetermined icons or information regarding their sizes may be stored in the storage unit 310. The predetermined icons or the information regarding their sizes are stored to correspond to the access date levels, respectively. That is, the user may change the transparency of the icon, the user may replace the icon with a previously created icon, or the user may change the size of the icon according to the access date level. A transparency change, a size change, and an icon replacement may be applied to all of the icons, or be selectively applied to individual icons. Here, the access date indicates a date the user last performed an operation using an icon, that is, a date when a program linked to the icon was last executed or a folder linked to the icon was last checked.

Alternatively, as discussed above, the difference between an access date and a certain date, that is not the current date, may be categorized into a plurality of access date levels. That is, each access date level is determined by a time interval between an access date that an icon was last accessed and a certain date. For instance, if the difference between an access date and a current date is 6 months, when a certain date is set to be four months earlier than the current date, the difference between the access date and the certain date is two months.

Accordingly, the apparatus 1 can change and display an icon according to the difference between an access date and a current date and also the difference between an access date and a certain date. The certain date may be input by the user.

With reference to Figure 3, the storage unit 310 may comprise a module, such as a hard disc, a flash memory, a compact flash (CF) card, a secure digital (SD) card, a smart media (SM) card, a multimedia card (MMC), or a memory stick, which information is input to or output from, or a combination thereof. The storage unit 310 may be included in the apparatus 1 or a separate device connected to the apparatus 1.

The scanning unit 320 periodically scans the icons. Scanning is a process of collecting properties given to the icon being scanned. Through scanning, all of the properties of or only temporal properties (a date when the icon was created, a date when the icon was changed, a date when the icon was last accessed, etc.) of the icon may be collected.

Here, a user may set a scan cycle in units of days, weeks, or months. Further, a user may set a scanning date and a scanning time. Also, a particular icon to be scanned may also be set by the user. For instance, the user may set the scanning unit 320 in such a way that only icons displayed on a desktop are scanned or that only an icon linked to a certain program is scanned. In still other embodiments, the user may set the scanning unit 320 in such a way that only icons belonging to a certain folder are scanned. Therefore, the scanning unit 320 performs a scanning of icons according to the settings of the user. Scanning may be performed on a program and a folder linked to an icon at different scan cycles. For instance, an "A" program may be scanned at intervals of three days and a "B" folder may be scanned at intervals of seven days.

The scanning unit 320 scans an icon to collect information regarding the icon, but the information to be gained from any future accessing of the icon is not affected. That is, even if the icon is scanned by the scanning unit 320, the access date of the icon is not changed. The scanned properties of the icon are then transmitted to the detection unit 330.

The detection unit 330 detects the access date of the icon based on the received properties of the icon. Here, the access date of the icon indicates a date when the user last performed an operation using the icon (e.g., a date when a program linked to the icon was last executed or a folder linked to the icon was last checked). Therefore, a date when an icon was merely selected via a mouse pointer is not regarded as the access date. Meanwhile, a date when a program or a folder linked to the icon was last accessed by clicking or double-clicking the icon is considered as the access date.

Here, icons are categorized as file icons and folder icons. The file icons include icons linked to certain programs and icons linked to a file by an execution of the certain program. A folder icon represents the logical location of a sub-folder or another folder storing a file. The user can check the sub-folder or the file belonging to the folder by clicking, double-clicking, or right-clicking the folder icon.

The properties of the file icon include dates when the file icon was created, modified, and last accessed. However, the properties of the folder icon may include only a date when the folder icon was created. For instance, if a short-cut icon for a certain folder is displayed on a desktop, the properties of the short-cut icon include dates when the short-cut icon was created, modified, and last accessed. However, when a copy of a certain folder is pasted on the desktop, the properties of the copy of the certain folder include a date when the copy was created, but do not include dates when the copy was modified and last accessed. This is due to the fact that the copy of the folder exists separately from the original folder. It may also be due to the fact that the operating system does not update the properties of the folder related to the access date.

Thus, in an embodiment of the invention, the short-cut icon for the certain folder and the access date of the icon of a copy or a newly created folder thereof (i.e., the certain folder itself) are all detected. The access dates of all the icons of the certain folder may be detected by checking the access dates of files belonging to the folder. That is, if a folder icon displayed on the desktop is an icon for the folder, the detection unit 330 does not detect the access date of the folder icon but, rather, detects the access date when a file of the folder was last accessed. As such, when the scanned icon is an icon for the folder itself, the scanning unit 320 may scan a file that belongs to the folder and may transmit the scanned result to the detection unit 330.

The detected access date is then transmitted to the icon conversion unit 340, and the icon conversion unit 340 converts the shape of the scanned icon based on the received access date. That is, the icon conversion unit 340 calculates the difference between the access date and the current date (or the certain date), checks the storage unit 310 for an access date level corresponding to the calculated difference and whether the transparency corresponding to the difference will be used, and converts the shape of the icon according to the properties of the icon. The difference between the access date and the current date (or the certain date) may be categorized in units of days, weeks, months, or years, and may be predetermined by the user.

The shape of the icon may also be converted by a changing of the transparency of the icon, a replacement of the icon with a previously created icon, or a changing of the size of the icon. The transparency of the icon may be changed according to the difference between the access date and the current date (or the certain date). Specifically, the transparency of the icon is set to be low when the difference between the access date and the current date (or the certain date) is small, and is set to be high when the difference between the access date and the current date (or the certain date) is large. For instance, when the calculated difference is less than six months, the transparency of the icon is set to 0%, when the difference is between six to twelve months, the transparency of the icon is set to 20%, when the difference is between one to two years, the transparency of the icon is set to 50%, and when the difference is two years or more, the transparency of the icon is set to 80%.

Therefore, the user is able to roughly predict the date that the icon was last accessed by the varying degree of transparency of the icon, and may delete an icon that has not been used or may delete a program linked to the icon.

Also, the icon conversion unit 340 may employ previously created icons to change the shape of the icon. The created icons are made or set by the user, and are stored in the storage unit 310, and the icon conversion unit 340 replaces the original icon with one of the stored icons according to the access date level. For instance, the user may create A, B, C, and D icons having different shapes, and may replace the original icon with the A icon when the difference between the access date and the current date (or the certain date) is less than six months, replace the original icon with the B icon when the difference is between six to twelve months, replace the original icon with the C icon when the difference is between one to two years, and replace the original icon with the D icon when the difference is two years or more.

Also, the icon conversion unit 340 may employ information regarding the size of the icon to change the size of the icon. The information may be set by the user and stored in the storage unit 310. Thus, the icon conversion unit 340 may change the size of the original icon according to the access date level based on the information stored in the storage unit 310.

Alternatively, the icon conversion unit 340 may assign a color to the icon according to work priority given to the icon. That is, when the work priority is categorized into a high level, a normal level, a private work level, and/or other levels, and the color of the icon may be replaced with a color corresponding to the work priority thereof. Here, the work priority may be a priority of the icon, or a priority of a program or a folder linked to the icon. For instance, a plurality of icons may be linked to a certain program to execute the program, and the user may determine different priorities of the icons according to the locations of the icons. That is, when an icon linked to a certain program to execute the program is present on a desktop and in a program folder, a higher priority may be assigned to the icon on the desktop and a lower priority to the icon in the program folder, respectively. Alternatively, the same priority may be assigned to all of icons linked to a certain program according to the user's setting.

The converted icon is transmitted to the display unit 350. The display unit 350 may comprises a module having a display unit, such as a cathode ray tube (CRT), a liquid crystal display (LCD), a light-emitting diode (LED), or a plasma display panel (PDP), which can display an input image signal and the received icon, or a combination thereof. That is, the display unit 350 may display icons according to their transparencies, using previously created icons, or changing the size of the icons. In this case, text given to the icons are not changed. Also, if the user cannot recognize the shape of an icon since the transparency of the icon is greater than a predetermined threshold, a border may be added to the icon.

Figure 4 is a view illustrating icons to which different transparencies or colors are assigned according to access dates thereof, according to an embodiment of the present invention. As shown in Figure 4, in the present embodiment, different transparencies or colors are assigned to icons 400A displayed on a desktop 400, and icons 450A displayed on a file explorer 450 such as Windows Explorer, according to access dates thereof. A user may predetermine icons to which transparencies or colors are to be assigned, or may set the transparencies or colors of the icons according to the difference between the access date and the current date (or the certain date).

With further reference to Figure 4, icons whose transparencies are 0%, 20%, 40%, 60%, and 80% are displayed on the desktop 400 and the file explorer 450. In this case, as described above, transparencies may not be assigned to texts given to the icons 400A and 450A. As such, the user may be able to recognize the icons 400A and 450A even when the shapes of the icons 400A and 450A are difficult to be recognized.

Also, when the transparency of an icon is greater than a predetermined threshold, a border may be formed around the icon, thereby allowing the user to recognize the transparent icon. In this case, the color of the border is, in an embodiment of the invention, complementary to the color of a region in which the icon is displayed. For instance, when the desktop 400 is dark, the border of a transparent icon displayed thereon may have a light color, and when the file explorer 450 is light, the border of a transparent icon displayed thereon may have a dark color. Referring to Figure 4, an exemplary border is added to the icons 400A and 450A respectively having transparencies of 60% and 80%.

To display the icons 400A and 450A according to their transparencies, when work priorities are assigned to the icons 400A and 450A, the colors of the icons 400A and 450A may be respectively changed to colors corresponding to their work priorities and may be displayed according to their transparencies. To change the colors of the icons 400A and 450A to colors corresponding to their work priorities, the icons 400A and 450A may be passed through corresponding color filters or a portion of the icons 400A and 450A may be replaced with a corresponding color.

Similarly, when a color of an icon is substantially similar to the color of the region in which the icon is displayed, a border that is complementary to both the color of the region and the color of the icon is displayed around the icon. For instance, if the icon and the region in which the icon is displayed are both red, a green border may be displayed around the icon.

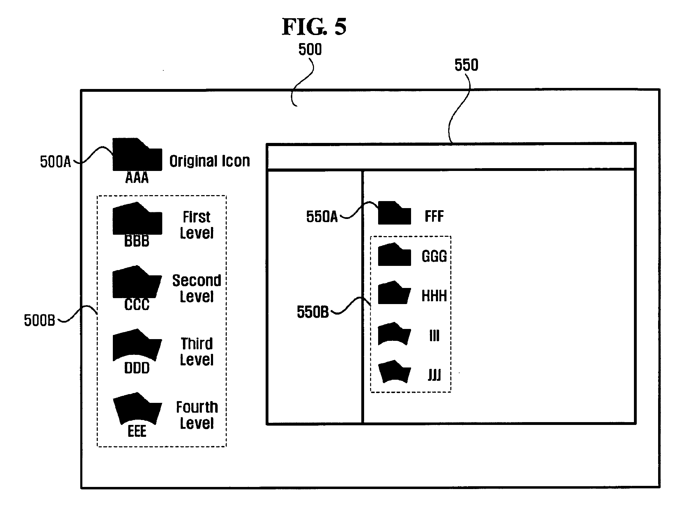

Figure 5 is a view illustrating previously created icons displayed according to access dates, according to an embodiment of the present invention. As shown in Figure 5, in the present embodiment, the previously created icons include not only icons 500A and 500B displayed on a desktop 500 but also icons 550A and 550B displayed on a file explorer 550 such as Windows Explorer. A user may have created icons and stored them in the storage unit 310 of Figure 3, and then categorized the icons according to access date levels.

With further reference to Figure 5, the original icon 500A, and the icons 500B that are categorized from first to fourth levels are displayed on the desktop 500, and the original icon 550A and the icons 550B that are categorized from first to fourth levels are displayed on the file explorer 550. Here, the first to fourth levels are categorized according to the difference between the access date and the current date (or the certain date), and the higher the level, the greater the difference between the access date and the current date (or the certain date). When the original icons 500A and 550A and the previously created icons 500B and 550B are displayed, work priorities may be assigned to the icons 500A, 500B, 550A and 550B, the shape of the icons 500A, 500B, 550A and 550B may be changed to shapes corresponding to their work priorities, and, then, the icons 500A, 500B, 550A and 550B may be displayed. To change the shapes of the icons 500A, 500B, 550A and 550B to shapes corresponding to their work priorities, the icons 500A, 500B, 550A and 550B may be respectively passed through corresponding shape filters, or the shape of a portion of the icons 500A, 500B, 550A, and 550B may be replaced with a corresponding shape.

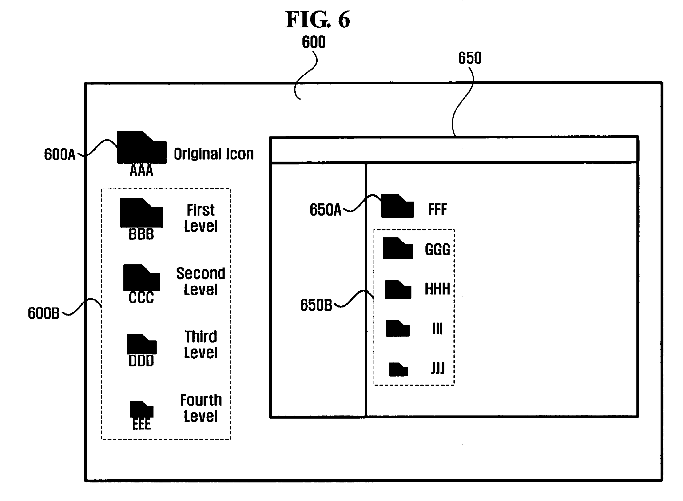

Figure 6 is a view illustrating icons having sizes determined according to access date, according to an embodiment of the present invention. As shown in Figure 6, in the present embodiment, the icons having sizes determined according to respective access dates include icons 600B displayed on a desktop 600 and icons 650B displayed on a file explorer 650 such Windows Explorer. Here, icons are predetermined icons having different sizes or icons having different sizes determined according to the difference between access date and the current date (or the certain date).

Referring to Figure 6, the original icon 600A and the icons 600B that are categorized from first to fourth levels are displayed on the desktop 600, and the original icon 650A and the icons 650B that are categorized from first to fourth levels are displayed on the file explorer 650. Here, the first to fourth levels are categorized according to the difference between the access date and the current date (or the certain date), and the higher the level, the greater the difference between the access date and the current date (or the certain date).

If the original icons 600A and 650A and the icons 600B and 650B are displayed, when work priorities are assigned to the icons 600A, 600B, 650A and 650B, the sizes of the icons 600A, 600B, 650A and 650B may be changed to sizes that correspond to their work priorities, and, then, the icons 600A, 600B, 650A and 650B may be displayed. To change the sizess of the icons 600A, 600B, 650A and 650B to sizes corresponding to their work priorities, the icons may be passed through their corresponding size filters, or the size of a portion of the icons 600A, 600B, 650A and 650B may be replaced with a corresponding size.

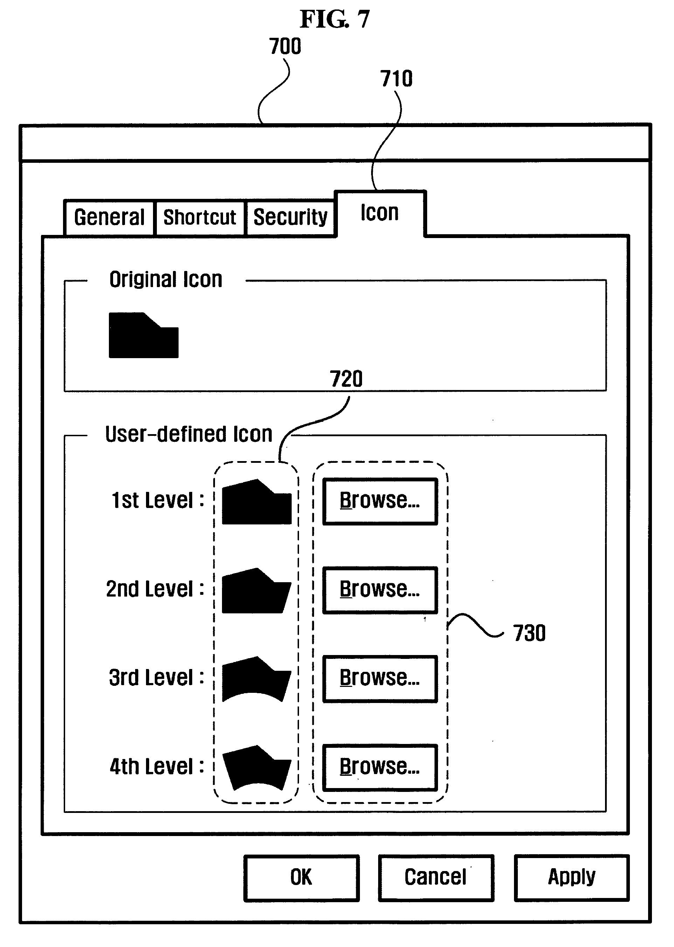

Figure 7 is a view illustrating a window 700 in which previously created icons respectively correspond to access date levels, according to an embodiment of the present invention. The window 700 may be embodied according to a separate program or as a conventional icon property window. Here, if the window 700 is embodied as the conventional icon property window, a separate tab 710 may further be set to make user-defined icons 720 correspond to the access date levels. As shown in Figure 7, Windows XP's Windows Explorer is used as the conventional icon property window 700, and the tab 710 is embodied as an icon tab, but, of course, the type of an operating system is not limited hereto.

The window 700 includes the user-defined icons 720, texts indicating the levels of the user-defined icons 720 that are categorized according to the difference between the access date and the current date (or the certain date), and buttons 730 through which the user-defined icons 720 are explored. Here, a user may recognize the levels by checking the user-defined icons 720, and replace the user-defined icons 720 with other previously created icons by using the buttons 730.

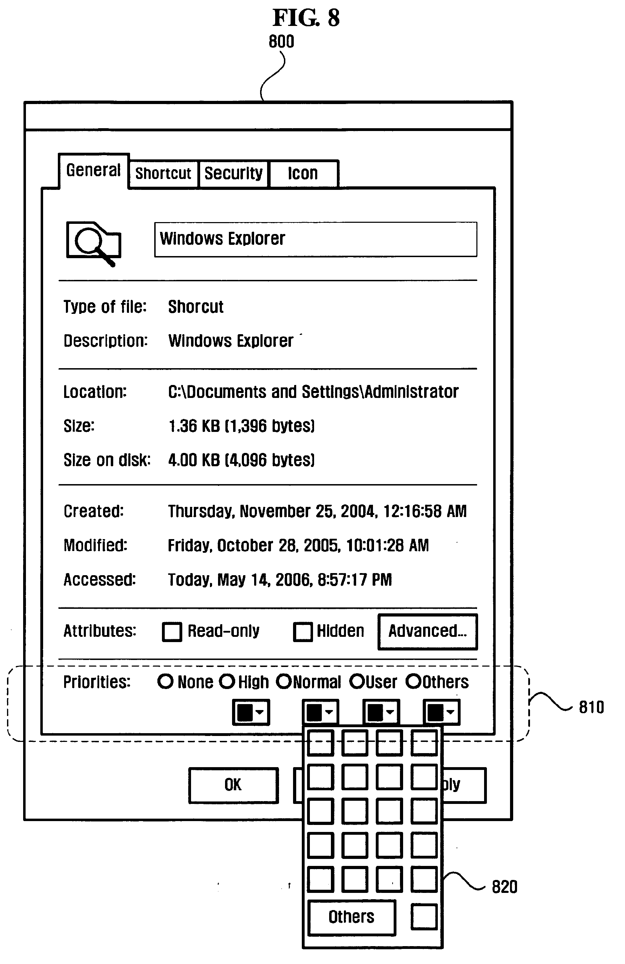

Figure 8 is a view illustrating an icon property window 800 through which work priority is assigned to an icon, according to an embodiment of the present invention. As shown in Figure 8, the icon property window 800 includes an item 810 to allow for an assigning of a work priority to the icon in question.

Work priorities may be categorized into a high level work priority, a normal level work priority, a private work level work priority, and/or other levels work priorities. In addition, an icon may have no work priority as a default level thereof. In the icon property window 800, one of the work priority levels may be selected using a radio button, and a color selection button may be set near each work priority level. If the color selection button is pressed, a color selection palette 820 is made to pop up, thus allowing for a selection of a color for each work priority level. A previously designated color is applicable to the other icons.

An aspect of the present invention may also be understood as relating to the scanning and converting of more than one icon. In accordance with this aspect of the invention, an apparatus to display at least first and second icons comprises a scanning unit to scan respective properties of each of the icons, a detection unit to detect respective access date information that is assigned to each of the scanned icons in accordance with dates each of the icons were last accessed, an icon conversion unit to convert the transparency, the color, the shape, and/or the size of at least one of the scanned icons according to relative differences between the detected access date information of each of the icons and a current date, and a display unit to display the at least one converted icon.

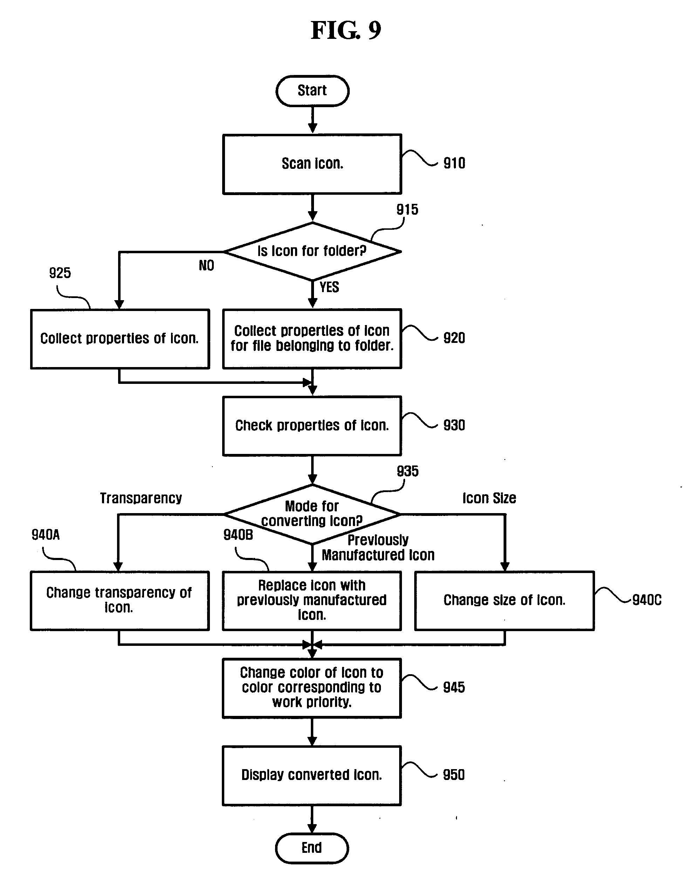

Figure 9 is a flowchart illustrating a method of displaying an icon according to access date, according to an embodiment of the present invention. As shown in Figure 9, to display an icon according to an access date thereof, the storage unit 310 of Figure 3 stores access date levels, previously created icons, and information regarding the size of the icon. Here, a user may set the access date levels in units of days, weeks, months, and years. Alternatively, the access date levels may be stored to correspond to the transparencies of the icon, the previously created icons, or the information regarding the size of the icons. The transparencies of the icon, the previously created icons, and the information regarding the size of the icons may be applied to all of the icons, or separately applied to each icon.

To obtain the access date of the icon, the scanning unit 320 of Figure 3 periodically scans the icon at operation 910. Scanning is performed to collect properties given to the icon, and all of the properties of or only temporal properties of the icon may be collected through scanning. According to the present invention, scanning is used to collect the access date of the icon, but if transparencies of the icon, the previously created icons, information regarding the sizes of the icon, and work priorities are given to the icon according to access date levels, scanning may also be performed to collect information thereof.

A scan cycle may be set by a user. The user may set the scan cycle in units of days, weeks, or months, and further, a time when scanning is to be performed. The scanning unit 320 may perform scanning only in a scan region set by the user. For instance, when scanning is to be performed only on a desktop, the scanning unit 320 scans only the desktop, and when scanning is to be performed only for a certain program or a certain folder, only icons linked to the certain program or the certain folder is scanned. Also, the scanning unit 320 may respectively scan icons at different scan cycles. To this end, the user may set a scan cycle for each icon differently. On the other hand, the properties of a file icon include dates when the file icon was created, modified and last accessed, but the properties of a folder icon may include only a date when the folder icon was created. Therefore, the scanning unit 320 determines whether the scanned icon is a file icon or a folder icon, and, if the scanned icon is determined to be a folder icon, the scanning unit 320 further determines whether the folder icon is a short-cut icon for a folder or an icon for the folder at operation 915.

If the scanned icon is a file icon or a short-cut icon for the folder, the properties of the icon are collected at operation 925, and if the scanned icon is an icon for the folder, the properties of an icon of a file belonging to the folder are collected at operation 920.

The scanned properties of the icon are then transmitted to the detection unit 330, and the detection unit 330 checks the received properties of the icon to obtain the access date of the icon at operation 930. Here, the detection unit 330 also checks whether work priority is assigned to the icon, detects the work priority if the work priority is assigned to the icon, and checks the color corresponding to the work priority. Also, the detection unit 330 transmits information regarding the mode of converting the shape of the icon (whether the transparency of the icon will be changed, the original icon will be replaced with a previously created icon, or the size of the icon will be changed) to the icon conversion unit 340.

Therefore, at least one of the access date, the work priority, the color corresponding to the work priority, and the mode of converting the shape of the icon is transmitted to the icon conversion unit 340.

The icon conversion unit 340 checks the mode of converting the shape of the icon at operation 935, and converts the shape of the icon based on the received access date at operation 940A, at operation 940B, and at operation 940C. If a work priority is assigned to the icon, a corresponding color may be applied to the work priority at operation 945.

Specifically, the icon conversion unit 340, which previously would have calculated the difference between the access date and the current date (or the certain date), then converts the shape of the icon according to the calculated difference. An access date level corresponding to the calculated difference is checked in the storage unit 310. To convert the shape of the icon according to the access date level, when a transparency is assigned to the icon, the transparency of the icon is replaced with one of transparencies stored in the storage unit 310 at operation 940A. Alternately, when there is a previously created icon, the current icon is replaced with one of the previously created icons stored in the storage unit 310 at operation 940B. Furthermore, when the size of the icon is changed based on the information regarding the size of the icon, the size of the icon is stored in the storage unit 310 at operation 940C. In this case, the color of the converted icon may further be changed into a color corresponding to the work priority of the icon at operation 945.

The converted icon is transmitted to the display unit 350 to be displayed at operation 955. That is, the display unit displays the converted icon as having a transparency or a size thereof changed or as being the one selected from the previously created icon. In this case, transparency may not be applied to a text given to the icon. Also, when the transparency of the icon is greater than a predetermined threshold, a border may be added to the icon.

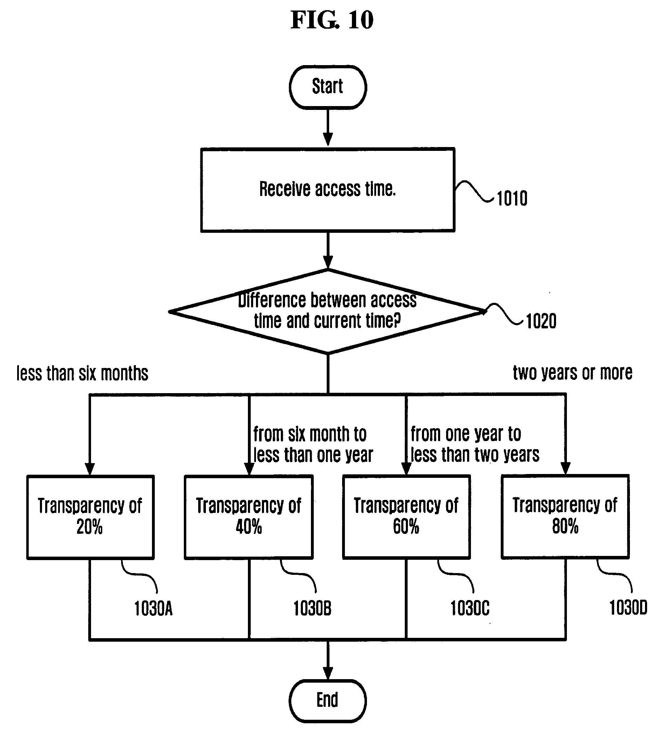

Figure 10 is a flowchart illustrating a method of assigning transparency to an icon according to access date, according to an embodiment of the present invention. As shown in Figure 10, the icon conversion unit 340 of Figure 3 receives the access date of the icon from the detection unit 330 at operation 1010, and calculates the difference between the access date and the current date (or the certain date) at operation 1020. Then, a transparency corresponding to an access date level is selected from among transparencies stored in the storage unit 310, and the selected transparency is assigned to the icon at operation 1030A, at operation 1030B, at operation 1030C, at operation 1030D. In particular, Figure 10 illustrates that the access date levels are categorized into less than six months, between six to twelve months, between one to two years, and two years or more.

Therefore, when the access date level is less than six months, the icon conversion unit 340 assigns a transparency of 20% to the icon at operation 1030A. When the access date level is in between six to twelve months, the icon conversion unit 340 assigns a transparency of 40% to the icon at operation 1030B. When the access date level is in between one to two years, the icon conversion unit 340 assigns a transparency of 60% to the icon at operation 1030C. When the access date level is two years or more, the icon conversion unit 340 assigns a transparency of 80% to the icon at operation 1030D.

Of course, it is understood that the present invention may be embodied as a computer readable medium on which a program is stored to execute the methods of displaying an icon discussed above. Such a medium may include a hard disk drive, a floppy disk, RAM/ROM memory, flash memory, an optical disk, a memory stick, etc., and/or combinations thereof.

As is described above, according to aspects of the invention, an apparatus and method to display icons have the following advantages. First, assigning a transparency to an icon displayed on a desktop or a file explorer and changing the transparency of the icon according to an access date level, thereby allowing a user to relatively easily recognize the frequency of use of a program linked to the icon and providing the user with a criterion for arranging a plurality of icons are each possible. Second, changing the color of displayed icons according to the priority assigned to a program or a folder linked to each icon, thereby allowing the user to easily recognize the degree of importance of the icons, is also possible.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An apparatus to display an icon, comprising:
a scanning unit (320) to scan the icon;
a detection unit (330) to detect predetermined date information assigned to the scanned icon;
an icon conversion unit (340) to convert the scanned icon into an icon corresponding to a difference between the detected predetermined date information and a current date; and
a display unit (350) to display the converted icon.

2. The apparatus according to claim 1, further comprising a storage unit (310) to categorize a difference between an icon access date and the current date into a plurality of access date levels.

3. The apparatus according to claim 2, wherein the storage unit (310) stores the access date levels, transparencies of the icon, previously created icons, and/or information regarding the size of the icon according to the access date levels.

4. The apparatus according to claim 1, 2 or 3, wherein the icon comprises at least one of a file icon and a folder icon.

5. The apparatus according to any preceding claim, wherein the scanning unit (320) periodically scans the icon.

6. The apparatus according to any preceding claim, wherein the predetermined date information comprises an access date when the icon was previously clicked on to access at least one of a program, a file, and a folder linked to the icon.

7. The apparatus according to claim 3, wherein the icon conversion unit (340) changes the transparency of the scanned icon into one of the transparencies stored in the storage unit (310), according to the difference between the detected predetermined date information and the current date.

8. The apparatus according to claim 3, wherein the icon conversion unit (340) replaces the scanned icon with one of the previously created icons stored in the storage unit (310), according to the difference between the detected predetermined date information and the current date.

9. The apparatus according to claim 3, wherein the icon conversion unit (340) changes the size of the scanned icon based on the information regarding the size of the icon stored in the storage unit (310), according to the difference between the detected predetermined date information and the current date.

10. The apparatus according to any preceding claim, wherein, when a user sets a certain date, the icon conversion unit (340) replaces the scanned icon with an icon corresponding to a difference between the detected predetermined date information and the certain date.

11. The apparatus according to any preceding claim, wherein the icon conversion unit (340) changes a color of the scanned icon to a color corresponding to a work priority assigned to the scanned icon.

12. The apparatus according to claim 11, wherein the work priority comprises at least one of a high level, a normal level, a private work level, and/or other levels.

13. The apparatus according to claim 11, wherein different work priorities are set according to a location of the scanned icon.

14. A method of displaying an icon, comprising:
scanning the icon;
detecting predetermined date information assigned to the scanned icon;
converting the scanned icon into an icon corresponding to a difference between the detected predetermined date information and a current date; and
displaying the converted icon.

15. The method according to claim 14, wherein the scanned icon comprises at least one of a file icon and a folder icon.

16. The method according to claim 14 or 15, wherein, during the scanning of the icon, the icon is periodically scanned.

17. The method according to claim 14, 15 or 16, wherein the date information comprises a date when an operation was last performed by using the icon on at least one of a program, a file, and a folder linked to the icon.

18. The method according to any of claims 14 to 17, wherein the converting of the scanned icon comprises changing a transparency of the scanned icon according to the difference between the detected predetermined date information and the current date.

19. The method according to any of claims 14 to 18, wherein the converting of the scanned icon comprises replacing the scanned icon with a previously created icon, according to the difference between the detected predetermined date information and the current date.

20. The method according to any of claims 14 to 19, wherein converting of the scanned icon comprises changing the size of the scanned icon according to the difference between the detected predetermined date information and the current date.

21. The method according to any of claims 14 to 20, wherein, when a user sets a certain date, the converting of the scanned icon comprises replacing the scanned icon with an icon corresponding to a difference between the detected predetermined date information and the certain date.

22. The method according to any of claims 14 to 21, wherein the converting of the scanned icon comprises changing a color of the scanned icon to a color corresponding to a work priority assigned to the scanned icon.

23. The method according to claim 22, wherein the work priority comprises at least one of a high level, a normal level, a private work level, and/or other levels.

24. The method according to claim 22, wherein different work priorities are set according to a location of the scanned icon.

25. A computer readable medium on which a program is stored to execute the method according to any of claims 14 to 24.

26. An apparatus to display an icon, comprising:
a scanning unit (320) to scan properties of the icon;
a detection unit (330) to detect access date information, the access date information being assigned to the scanned icon in accordance with a date the icon was last accessed;
an icon conversion unit (340) to convert the transparency, the color, the shape, and/or the size of the scanned icon according to a difference between the detected access date information and a current date; and
a display unit (350) to display the converted icon.

27. An apparatus to display at least first and second icons, the apparatus comprising:
a scanning unit (320) to scan respective properties of each of the icons;
a detection unit (330) to detect respective access date information that is assigned to each of the scanned icons in accordance with dates each of the icons were last accessed;
an icon conversion unit (340) to convert the transparency, the color, the shape, and/or the size of at least one of the scanned icons according to relative differences between the detected access date information of each of the icons and a current date; and
a display unit (350) to display the at least one converted icon.

28. A method of managing a display of an icon, comprising:
scanning and storing first properties associated with the icon and scanning and storing second properties;
determining if the icon should be converted according to differences between the scanned and stored first properties and the scanned and stored second properties;
if the scanned icon should be converted, converting the scanned icon according to the differences; and
displaying the converted icon.

29. A method of managing a display of an icon, comprising:
scanning and storing an access time associated with a time when the icon was last accessed;
determining a difference between the access time and a current time;
converting the display of the icon according to the determined difference; and
displaying the converted icon.
